# EUROPEAN PATENT SPECIFICATION

(11) **EP 1 394 214 B1**
(45) Date of publication and mention of the grant of the patent: **29.02.2012**
(21) Application number: 02720485.8
(22) Date of filing: 18.04.2002
(51) Int. Cl.: C08L 77/00, C08K 3/34, C08K 5/09, C08K 7/04, H01H 85/153, C08L 77/02, C08L 77/06

(54) **POLYAMIDE RESIN COMPOSITION FOR FUSE DEVICE**
POLYAMIDHARZZUSAMMENSETZUNG FÜR SICHERUNGSVORRICHTUNG
COMPOSITION A BASE DE RESINE DE POLYAMIDE POUR DISPOSITIF A FUSIBLE

(30) Priority: 19.04.2001 JP 2001121086
(43) Date of publication of application: 03.03.2004
(73) Proprietor: Pacific Engineering Corporation, Ogaki-shi, Gifu-ken 503-0981 (JP)
(72) Inventor: FUJIMOTO, Koji, UNITIKA LTD., Uji-shi, Kyoto 611-0021 (JP); MURAKAMI, Iwao, Pacific Engineering Corp., Ogaki-shi, Gifu 503-0981 (JP); ANDOH, Hideki, Pacific Engineering Corp., Ogaki-shi, Gifu 503-0981 (JP)
(74) Representative: Vossius & Partner
(86) International application number: PCT/JP2002/003854
(87) International publication number: WO 2002/085984

(56) References cited:
- WO-A1-00/52724
- JP-A- 6 248 176
- JP-A- 6 271 766
- JP-A- 7 097 514
- JP-A- 11 071 517
- JP-A- 2000 313 803

## Description

The present invention relates to a fuse element, wherein the housing is formed from a polyamide resin composition which is excellent in arc resistance property, transparency, heat deforming resistance property and productivity and can be suitably used, for example, as the fuse elements available to electric circuit of automobiles.

### Background Art

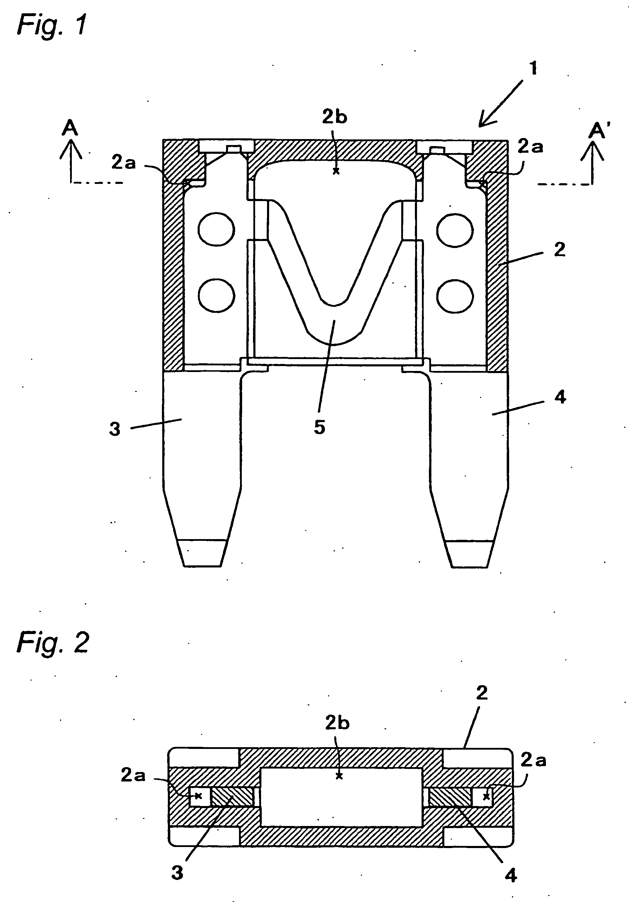

Generally, the wiring of every kind of electrical equipment in an automobile is assembled to a fuse box, and the every kind of electrical equipment is connected to battery via a fuse element having a value of rated current available to the magnitude of electric current running to it and the frequency in use. Such a fuse element 1 (Fig. 1) has a housing 2 and a pair of terminals 3 and 4 which is projecting out of the defined plane of the housing and standing in a row, and it has a structure containing a fuse-element 5 connected between both terminals in the housing 2. At the time when electrical current beyond the rated current is produced due to any cause and short circuit happens, the continuity between input terminal and output terminal is intercepted by fusing of the fuse-element 5 of this fuse element and excess current is prevented to continue running into each electrical equipment. For the housing 2 of fuse element 1, a transparent resin such as polysulfone, polyethersulfone and the like excellent in heat resistance and insulating property is used so that it can be easily distinguished from outside whether the fuse element is fused or not.

Up to now, many battery systems for 14V generator (12V storage) have been mounted on automobiles and above-mentioned fuse element has been designed as 32V rated current, 32V x 1000A interception property (rated current rated interception capacity) in order to adapt to this battery system. However, these days, as the result of the increase of the amount of electrical equipment and electronics control apparatus mounted on automobiles and their change to larger size, the consumption of electricity is becoming more and more in whole vehicle. As the result, the increase of car weight due to the change to larger size of battery alternator and the change to heavier line of wire harness is coming into trouble, and as the drastic plan the change to higher value in automobile voltage (to 42V system) has been considered.

When the automobile voltage is raised to 42V system, the arc due to larger voltage is produced over long time in fusing of fuse-element installed in fuse element than in conventional 14V system. But, anti-tracking property of polysulfone and polyethersulfone and the like constituting the conventional housing is not high enough to be available to 42V system. This is due to carbonization of polymer containing aromatic ring in main chain and is the essential phenomenon coming from resin itself. Namely, even if the fuse-element fuses, a leak current runs along the inner surface of the housing due to carbonization of the surface and the continuity condition between both terminals is maintained, and as the result, there is a possibility that housing and terminals melt and break. Therefore, in 42V system, the development of the fuse element made of the resin having the structure not to produce the carbonization of the inside of the housing at fusing of fuse-element is urgently demanded.

Under such background a fuse element made of aliphatic polyamide resin (for example, nylon 6/nylon 66 polymer alloy) has been examined to maintain the arc resistance property required as a fuse. But such polyamide homopolymers are so high in crystallinity that its moldings are poor in transparency. Accordingly, when it is molded as fuse element, there is a problem that the condition of the inside of the housing cannot be checked.

And the fuse housing is distinguished by the color classified based on the magnitude of the rated current in consideration of safety and convenience at exchange. Therefore, it is desirable that the materials for fuse element has a depressed color change by the heat in engine room.

JP 6-271 766 A discloses a polyamide resin composition comprising 40-99 wt.% aliphatic polyamide resin having a terminal COOH content of 3·10⁻⁵⁺ to 20·10⁻⁵ eq/g (e.g. nylon 6) and 1-60 wt.% fiber reinforcement (e.g. glass fibers) which are kneaded with 10-900 pts.wt. crystalline half-aromatic copolyamide resin comprising 20-90 wt.% hexamethylene-terephthalamide units and 10-80 wt.% units of another amide (e.g. hexamethyleneadipamide) and 1-200 pts.wt. fibrous reinforcement.

JP 2000-313 803 A describes a polyamide resin composition produced by blending (A) 100 pts.wt. polyamide resin comprising (a1) 99-50 wt.% polyamide resin having a heat of crystalline melting of not less than 1 cal/g and (a2) 50-1 wt.% polyamide resin having a heat of crystalline melting of less than 1 cal/g, (B) 0.01-100 pts.wt. liquid crystalline resin and (C) 0.01-5 pts.wt. acid anhydride.

JP 7-97 514 A relates to a polyamide resin composition obtained by blending (A) a polyamide resin comprising (a1) a specific amount of a polyamide resin composed of a hexamethylene adipamide unit, a hexamethylene isophthalamide unit and/or a capronamide unit and (a2) a specific amount of an aliphatic polyamide containing polyamide 66 with (B) at least one inorganic filler selected from glass fiber, carbon fiber, mica, milled fiber, talc, kaolin, wollastonite, calcium carbonate, magnesium oxide and potassium titanate and an insulating material for slide switch comprising the composition.

US 6,103,805 A discloses a polyamide resin composition comprising (A) a reinforced polyamide resin which comprises 100 parts by weight of a nylon 6 homopolymer or copolymer and 1 to 20 parts by weight of a layered silicate uniformly dispersed in the polymer on the molecular level and (B) a non-reinforced polyamide resin, a test specimen of said composition having a tensile weld strength of 45 MPa or higher and a flexural modulus of 4 GPa or higher.

JP 6-248176 A describes a resin composition comprising 100 pts.wt. polyamide and 0.01-100 pts.wt. swellable fluoromica mineral and a method comprising polymerizing one or more polyamide-forming monomers in the presence of 0.01-100 pts.wt. fluoromica mineral per 100 pts.wt. polyamide to be formed from the monomers.

WO 00/52724 A1 relates to a blade fuse having a housing section and a fusible element, wherein the housing includes an insulating portion or tab extending from the housing section, and disposed between opposite ends of the fusible element.

### Disclosure of Invention

The object of the present invention is to provide a fuse element which can suppress the generation of leak current owing to carbonization of inside of housing when the fuse-element in fuse element mounted on battery system for automobiles having raised voltage fuses down, which has functions essential to fuse housing, for example transparency and heat resistance, and also which has anticoloring property against heat, and to provide a fuse element made of said resin composition.

The inventors of the present invention have researched to solve the above objects, and have found that above-mentioned objects are solved and excellent housing for fuse element can be obtained by using a resin composition consisting of polyamide copolymer and polyamide resin.

That is, the summary of the present invention is as defined in the claims.

The present invention is explained in detail as follows.

The resin composition used in the housing of the fuse element of the present invention needs to be a polyamide resin composition comprising a polyamide resin consisting of 95 to 5% by mass of polyamide copolymer(A) and 5 to 95% by mass of polyamide homopolymer(B). Though the mixing ratio of polyamide copolymer(A) and polyamide homopolymer(B) in such polyamide resin composition depends on balance between transparency and the other physical property (mechanical property and heat resistant property and the like), in the present invention the ratio (A)/(B) needs to be 95/5 to 5/95 (mass ratio), and preferably 80/20 to 20/80. When the content of polyamide copolymer(A) exceeds 95% by mass, the rigidity and heat resistance of molded housing decreases and it is not preferable. On the other hand, when the content of polyamide copolymer is less than 5% by mass, the transparency of molded housing decreases and it is not preferable, again.

In the present invention, polyamide resin is meant by polymers having amide bonds formed from aminocarboxylic acids, lactams or diamines and dicarboxylic acids (containing a couple of their salts) as the main ingredients in the main chain. As the concrete examples of these ingredients, aminocarboxylic acids contain 6-aminocaproic acid, 11-aminoundecanoic acid, 12-aminododecanoic acid, p-aminomethylbenzoic acid, and the like. Lactams contain ε-caprolactam, ω-undecanolactam, ω-laurolactam, and the like. Diamines contain tetramethylenediamine, hexamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, 1,3-bis(aminomethyl)cyclohexane, bis(4-aminocyclohexyl)methane, bis(3-methyl-4-aminocyclohexyl)methane, 2,2,-bis(4-aminocyclohexyl)propane, and the like. And dicarboxylic acids contain adipic acid, suberic acid, azelaic acid, sebacic acid, dodecanedioic acid, hexahydroterephthalic acid, hexahydroisophthalic acid, and the like. These diamines and dicarboxylic acids can also be used in the form of a pair of salts thereof.

The examples of polyamide copolymer(A) used in the fuse element of the present invention contain poly(caproamide/undecamide) copolymer (nylon 6/11), poly(caproamide/dodecamide) copolymer(nylon 6/12), poly(caproamide/hexamethylene adipamide) copolymer (nylon 6/66), poly(caproamide/bis(4-aminocyclohexyl) methane dodecamide) copolymer, poly(caproamide/bis(3-methyl-4-aminocyclohexyl)methane dodecamide) copolymer, and the like or the mixture thereof. Among them nylon 6/11, nylon 6/12 and nylon 6/66 are preferable.

The copolymer composition of said polyamide copolymer cannot be uniformly decided, because it also depends on the mixing ratio with polyamide homopolymer(B) so as to balance among arc resistant property, transparency and heat resistance of the fuse housing. But taking nylon 6/11 and nylon 6/12 as an example, a preferable ratio of (the component of nylon 6)/(the component of nylon 11 or nylon 12) is 50/50 to 95/5(based on mole %), and particularly preferably 70/30 to 90/10. When the component of nylon 6 is less than 50% by mole, polyamide copolymer is inferior in heat resistance as fuse housing in some case, and when the component of nylon 6 exceeds 95% by mole, polyamide copolymer cannot retain the transparency in some case. In the case of nylon 6/66, a preferable ratio of (the component of nylon 6)/(the component of nylon 66) is 50/50 to 98/2(based on mole %), more preferably 70/30 to 95/5,and particularly preferably 80/20 to 90/10. When the component of nylon 6 is less than 50% by mole, polyamide copolymer is inferior in heat resistance in some case, and when the component of nylon 6 exceeds 98% by mole, polyamide copolymer cannot retain the transparency in some case.

The examples of polyamide homopolymer (B) used in the fuse element of the present invention contain polycaproamide (nylon 6), poly(tetramethylene adipamide) (nylon 46), poly(hexamethylene adipamide) (nylon 66), polyundecamide (nylon 11), poly-dodecamide (nylon 12), poly(hexamethylene sebacamide) (nylon 610), poly(hexamethylene dodecamide) (nylon 612), poly(undecamethylene adipamide) (nylon 116), poly[bis(4-aminocyclohexyl) methane dodecamide] (nylon PACM12), poly[bis(3-methyl-4-aminocyclohexyl)methane dodecamide] (nylon dimethyl PACM12), and the mixture thereof. Among them, nylon 6 and nylon 66 are particularly preferable.

As described above, on the viewpoint of arc resistance, it is preferable that both of polyamide copolymer(A) and polyamide homopolymer(B) do not contain any aromatic ring in their molecular structure, but they may contain the aromatic rings within the range not spoiling their arc resistant property in order to maintain the other property as fuse housing, such as heat resistance and transparency, and the like. In such case, polyamides containing monomer components such as m-xylylenediamine, p-xylylenediamine, terephthalic acid, isophthalic acid, 2-chloroterephthalic acid, 2-methylterephthalic acid, 5-methylisophthalic acid, 5-sodiumsulfoisophthalic acid can be used. As polyamide copolymer containing aromatic ring, poly(caproamide /hexamethylene terephthalamide)copolymer (nylon6/6T), poly(caproamide/hexamethylene isophthalamide)copolymer (nylon 6/6I), poly(caproamide/m-xylylene terephthalamide) copolymer, poly(caproamide/m-xylylene isophthalamide) copolymer, poly[caproamide/bis(3-methyl-4-aminocyclohexyl) methane terephthalamide] copolymer, poly[caproamide/bis(3-methyl-4-aminocyclohexyl)methane isophthalamide] copolymer, poly[caproamide/bis(4-aminocyclohexyl)methane terephthal amide] copolymer, poly[caproamide/bis(4-aminocyclohexyl) methane isophthalamide] copolymer, poly(hexamethylene terephthalamide/hexamethylene isophthalamide) copolymer (nylon6T/6I), poly(hexamethylene adipamide/hexamethylene terephthalamide) copolymer (nylon66/6T), poly(hexamethylene adipamide/hexamethylene isophthalamide) copolymer (nylon66 /6I), and the like are exemplified. As polyamide homopolymer containing aromatic ring, poly(hexamethylene isophthalamide) (nylon 6I), poly(hexamethylene terephthalamide) (nylon 6T), poly(trimethylhexamethylene terephthalamide) (nylon TMDT), poly(undecamethylene terephthalamide (nylon 11T), poly(m-xylylene adipamide) (nylon MXD6), and the like are exemplified.

The molecular weight (relative viscosity) of above-described polyamide resin is not particularly limited, but it is preferable that relative viscosity measured under the condition that concentrated sulfuric acid having 96% concentration by mass is used as solvent, measuring temperature is 25°C and the concentration of polyamide is 1g/dl, is in the range of 1.5 to 5.0, particularly 2.0 to 4.0. When the relative viscosity is less than 1.5, the mechanical property of moldings tend to be low, and on the other hand when it exceeds 5.0, the moldability tends to notably decrease.

The polyamide resin compound used in the fuse element of the present invention may contain swellable lamellar silicates dispersed as fine filler, if necessary. The content of the swellable lamellar silicates is preferably 0.1 to 20% by mass, more preferable 0.5 to 10% by mass, and most preferably 1 to 5% by mass. When the content is less than 0.1% by mass, the effect reinforcing the resin matrix by silicate layer of lamellar silicate is poor, and the rigidity and heat resistance of the polyamide resin composition for fuse element decrease. On the other hand, when the content exceeds 20% by mass, the toughness and transparency of polyamide resin composition decrease.

In order that silicate layer exists in polyamide resin composition as the fine filler, it is preferable to use the lamellar silicate-containing polyamide resin where silicate layer is dispersed in polyamide copolymer(A) and/or polyamide homopolymer(B) as the fine filler.

In the present invention, "lamellar silicate-containing polyamide resin" means polyamide resin in which matrix silicate layer of swellable lamellar silicate is dispersed in molecular order level. And the silicate layer is a basic unit constructing swellable lamellar silicate and is an inorganic lamellar crystal obtained by collapsing (hereinafter, refer to as cleavage) the lamellar structure of swellable lamellar silicate. In the present invention, "silicate layer" means the each sheet of this silicate layer or the laminated state having five or less layers in average. "Dispersed in molecular order level" means the state where each of silicate layer of swellable lamellar silicate exists in dispersed in resin matrix without forming any mass, keeping an interlayer distance of not less than 2 nm in average. "Interlayer distance" is the distance between the centers of gravity of above silicate layer. Such state can be confirmed by observing the specimen of a lamellar silicate-containing polyamide resin, for example by observing the transmission electron microscope photograph.

Such swellable lamellar silicates can be natural products or can be artificially synthesized or modified, and their examples contain smectite group (montmorillonite, beidellite, hectorite, sauconite, and the like), vermiculite group (vermiculite and the like), mica group (fluoromica, muscovite, pallagonite, phlogopite, lepidolite, and the like), brittle mica group (margarite, clintonite, anandite, and the like), chlorite group (donbassite, sudoite, cookeite, clinochlore, chamosite, nimite, and the like). In the present invention, Na-type or Li-type of swellable fluoromica-based minerals or montmorillonite are particularly suitable.

Swellable fluoromica-based minerals used in the present invention are ones generally shown by the following structure:

Na_{α}(MgₓLi_{β})Si₄O_{Y}F_{Z}

(in this formula, 0≤α≤1, 0≦β≦0.5, 2.5≦X≦3, 10≦Y≦11, 1≦ Z ≦2)

An example of the process for preparation of above-described swellable fluoromica-based minerals is the melting method where silicon oxide, magnesium oxide and each kind of fluorides are mixed and the mixture obtained is completely melted at the temperature range of 1400-1500°C in electric furnace or gas furnace, and during the cooling process the crystal of swellable fluoromica-based minerals is grown in reaction vessel.

Also, a preparation method of swellable fluoromica-based minerals where a talc as the starting substance is intercalated with alkali metal ion to be given the swelling property, can be used (Japan Provisional publication No.149415/1990). In this process, swellable fluoromica-based minerals can be obtained by heat-treating the prescribed ratio mixture of talc with fluoroalkalisilicate or alkali fluoride at 700 - 1200°C in porcelain crucible. The formation of the swellable fluoromica-based minerals is confirmed by subjecting the swellable fluoromica-based minerals purified by elutriation treatment to the measurement of cation exchange capacity described below. This measurement is possible only when swellable fluoromica-based minerals are produced, because ion exchangeable cations exist among the layers, then.

Montmorillonites used in the present invention are ones shown by the following formula:

MₐSi (Al₂₋ₐMg) O₁₀ (OH) _{2 ·} nH₂O

(in this formula, M represents a cation such as sodium, and 0.25≦a≦0.6. The number of water molecule binding with interlayer ion-exchangeable cations is shown by nH₂O, because it can fluctuate variously depending on the condition such as the kind of cation and moisture, and the like.)

Ion substitution products of montmorillonite having the same type, such as magnesian montmorillonite, iron montmorillonite, iron magnesian montmorillonite, are known and these may be also used.

In the present invention, there is no restriction on the initial particle size of swellable lamellar silicate. "Initial particle size" means the particle size of swellable lamellar silicate as the starting material used in preparing swellable lamellar silicate-containing polyamide resins and differs from the size of silicate layer in composite material. But this particle size gives an effect not a little on mechanical properties of lamellar silicate-containing polyamide resins, and therefore it is preferable to control the particle size by crushing the swellable lamellar silicate using jet-mill etc. in order to control the physical property. In the case that swellable fluoromica-based minerals are synthesized using the intercalation method, initial particle size can be changed by suitably selecting the particle size of original talc. This is a preferable method in the respect that the particle size can be controlled in a wide range by using together with pulverization.

Swellable lamellar silicates of the present invention have the structure consisting of negatively charged lamellar crystal which mainly contains silicates and ion exchangeable cations lying between said layers. There is particularly no restriction on cation exchange capacity(CEC) measured by the method described below, but it must be considered in the following case and preferably its range is 50 - 200 milli-equivalent/100g. When CEC is less than 50 milli-equivalent/100g, the swelling ability is so low that sufficient cleavage cannot be attained at polymerization of lamellar silicate-containing polyamide resins, and as the result, the effect improving the mechanical property and heat resistance of the lamellar silicate-containing polyamide resins obtained would be poor. On the other hand, when CEC exceeds 200 milliequivalent/100g, the toughness of the lamellar silicate-containing polyamide resins obtained becomes lower by a large extent and becomes brittle, and it is not preferable. Namely, there is a probability that a breakage coming from the shortage of the weld strength of the housing emerging in dependence on the design of injection molding die occurs in the process constructing a fuse element using fuse housing consisting of the present resin composition. In order to avoid this phenomenon which produces a problem in the aspect of productivity, it is preferable to use lamellar silicates having smaller CEC within the desirable range of CEC of the above-mentioned lamellar silicates. In this case, it is more effective to use a lamellar silicate CEC of which is, for example, at 50 - 100 milliquivalent/100g, and more preferably at 50 - 70 milliquivalent/100g. If any lamellar silicate like this is used, the rigidity and heat resistance of polyamide resin compound do not largely fluctuate, and it can be used as a fuse housing without problem.

Next, the process for preparation of the polyamide resin composition is explained.

The process for preparation of polyamide copolymer (A) and polyamide homopolymer (B) used in the fuse element of the present invention is not particularly limited, and these polyamides are obtained by melt polymerization under the condition of temperature of 240 - 300°C, pressure of 0.2 - 3MPa, and time of 1 - 15Hrs, after putting the fixed amount of said monomers into autoclave. Polyamide copolymer(A) and polyamide homopolymer(B) thus obtained are blended as pellet or kneaded as melt at fixed mixing ratio within the range described above to obtain polyamide resin composition used in the fuse element of the present invention.

As described above, polyamide copolymer(A) and/or polyamide homopolymer used in the fuse element of the present invention are preferably prepared as the lamellar silicate-containing polyamide resin where swellable lamellar silicate is dispersed on molecular order level by polymerization under existence of swellable lamellar silicate. The condition where swellable lamellar silicate is dispersed in polyamide resin on molecular order level, is obtained by polymerizing the prescribed amount of above-described monomers in the presence of swellable lamellar silicate and cleaving the lamellar silicate. On this occasion, the polymerization may be suitably conducted at the condition of the range of temperature of 240 - 300°C, pressure of 0.2 - 3MPa, and time of 1 - 15Hrs using an ordinary method of melt polymerization.

In the polymerization of this lamellar silicate-containing polyamide resin, it is preferable to add any acid. The addition of acid promotes the cleavage of swellable lamellar silicate and the dispersion of silicate layer into resin matrix proceed further. Resultantly, lamellar silicate-containing polyamide resin having high rigidity and heat resistance is obtained.

Said acid may be either organic or inorganic acid as long as it is the one having pKa (at 25°C, in water) of 0-6 or negative. Concrete examples of them contain benzoic acid, sebacic acid, formic acid, acetic acid, chloroacetic acid, trichloroacetic acid, trifluoroacetic acid, nitrous acid, phosphoric acid, phosphorous acid, hydrochloric acid, hydrobromic acid, hydroiodic acid, nitric acid, sulfuric acid, perchloric acid, and the like.

The amount of acid to be added is preferably treble moles or less based on total cation exchange capacity of swellable lamellar silicates used, more preferably 1 - 1.5 times. When this amount exceeds treble moles, the degree of polymerization of lamellar silicate-containing polyamide resin becomes difficult to increase and the productivity decreases, and it is not preferable.

And there is another method where before the polymerization of said lamellar silicate-containing polyamide resin, all of the said swellable lamellar silicate the amount of which is within above-mentioned ranges and water as the catalyst are mixed into a part of the monomers which form polyamide copolymer(A) and/or polyamide homopolymer(B) and then residue of the monomers are mixed, and after that, these monomers are polymerized. In this case, in above mixing of ingredients in advance of polymerization, it is preferable to use a stirring apparatus to make high revolution and high shear possible or a ultra-sonic irradiating apparatus, or to treat over heating. In this method, it is preferable to add the said acids when the ingredients to be charged are mixed, and the adding amount is preferable to be within said range.

Polyamide resin composition used in the fuse element of the present invention contains preferably 0.1 - 4 parts, more preferably 0.3 - 3 parts by mass of heat resistant modifier based on 100 parts by mass of polyamide resin consisting of polyamide copolymer(A) and polyamide homopolymer(B). This ingredient gives heat discoloring resistance important for fuse element. When the content of this heat resistant modifier is less than 0.1 parts by mass, the effect to prevent heat discoloring is poor, and when the content is more than 4 parts by mass, there is a possibility that the moldability becomes worse while the better effect of heat discolorating resistance is recognized. As such heat resistant modifier, phosphorous esters of pentaerythritol and hydroxyl group-containing compound are exemplified, and as concrete examples PEP-4, PEP-8, PEP-24G and PEP-36 manufactured by Asahidenka kogyo Inc., and the like are listed.

Polyamide resin composition used in the fuse element of the present invention contains preferably 0.01 - 0.5 parts, more preferably 0.01- 0.3 parts by mass of mold releasing modifier based on 100 parts by mass of polyamide resin consisiting of polyamide copolymer(A) and polyamide homopolymer(B) in order to improving the mold release property at molding. When the content of this mold releasing agent is less than 0.01 parts by mass, the effect for mold release is poor, and when the content is more than 0.5 parts by mass, the bad influence of the lowering of weld strength etc. become notable. As such preferable mold releasing agent, metallic soap such as metal salts of stearic acid series and montanic acid series are exemplified, and as concrete examples "Ricomont NaV101", "Ricomont CaV102" and "Ricomont LiV103" manufactured by Clariant Company, and the like are listed.

Polyamide resin composition used in the fuse element of the present invention may further contain 3 - 10 parts by mass of inorganic fibrous reinforcement based on 100 parts by mass of polyamide resin consisting of polyamide copolymer(A) and polyamide homopolymer(B) as occasion demands and the amount is controlled in the limit not damaging the transparency and not producing the abrasion of mold. The examples of inorganic reinforcement contain glass fiber, wollastonite, metal whisker, ceramic whisker, potassium titanate whisker and carbon fiber, and the like.

In the production of polyamide resin composition for the fuse element of the present invention, heat stabilizers, antioxidants, reinforcements, dyes, pigments, coloration inhibitor, weatherproof agents, flame retardant, plasticizers, crystalline nuclear agents, mold releasing agents, and the like may be added as long as its feature is not notably damaged. These may be added, if needed, at the production of polyamide or at mixing of two kinds of polyamides.

As the reinforcements other than aforementioned ones, clay, talc, calcium carbonate, zinc carbonate, silica, alumina, magnesium oxide, calcium silicate, sodium aluminate, sodium aluminosilicate, magnesium silicate, glass balloon, zeolite, hydrotalcite and boron nitride, and the like may be compounded, for example.

Further, any other thermoplastic polymers may be mixed into the polyamide resin composition used in the fuse element of the present invention as long as the effect of the present invention is not damaged. As such thermoplastic polymers, elastomers such as polybutadiene, butadiene/styrene copolymer, acrylic rubbers, ethylene/propylene copolymer, ethylene/propylene /diene copolymer, natural rubber, chlorinated butyl rubber, chlorinated polyethylene or its acid-modified products with maleic anhydride etc.; styrene/maleic anhydride copolymer, styrene/phenylmaleimide copolymer, polyethylene, polypropylene, butadiene/acrylonitril copolymer, poly(vinyl chloride), poly(ethylene terephthalate), poly(butylene terephthalate, polyacetal, poly(vinylidene fluoride), polysulfone, poly(phenylene sulfide), polyethersulfone, phenoxy resin, poly(phenylene ether), poly(methyl methacrylate), polyetherketones, polycarbonate, polytetrafluoroethylene and polyarylate, and the like are exemplified.

Polyamide resin composition used in the fuse element of the present invention has excellent arc resistance property, heat deforming resistance property, transparency and low mold abrasion property. Such resin composition can be easily molded into a housing for fuse element using conventional molding methods such as injection molding.

### Brief Description of Drawings

Figure 1 represents a longitudinal section of automobile blade fuse showing one embodiment of the present invention.
Figure 2 represents a cross section along A-A' line of Figure 1.

### Best Mode for Carrying Out the Invention

The following Examples illustrate the present invention more concretely.

The ingredients and the method for measuring the physical properties which are used in Examples and Comparative Examples are as follows.

### 1. Ingredients

### (1) Swellable fluoromica-based mineral(M-1)

Sodium silicofluoride having average particle size of 6.0 µm was mixed to talc having average particle size of 6.0 pm with the content of 15% by mass based on total amount of mixture. The mixture was putted in porcelain crucible and was subjected to intercalation reaction by the reaction at 850°C for 1 hr in electric furnace, and swellable fluoromica (M-1) having average particle size of 6.0 pm was obtained. The construction of this swellable fluoromica was Na_{0.60}Mg_{2.63}Si₄O₁₀F_{1.77} and its CEC was 100 milliequivalent/100g.

### (2) Swellable fluoromica-based mineral(M-2)

Mixture of 45/55 mole ratio of sodium silicofluoride and lithium silicofluoride having average particle size of 6.0 pm was mixed to talc having average particle size of 1.0 µm with the content of 15% by mass based on total amount of mixture. The mixture was putted in porcelain crucible and was subjected to intercalation reaction by the reaction at 850°C for 1 hr in electric furnace, and swellable fluoromica (M-2) having average particle size of 1.0 pm was obtained. The construction of this Swellable fluoromica was Na_{0.29} (Mg_{2.92}Li_{0.36)} Si₄O₁₀F_{1.51} and its CEC was 66 milliequivalent/100g.

### (3) Montmorillonite (M-3)

"Kunipia-F" manufactured by Kunimine Kogyo Inc. was used. Its CEC was 115 milliequivalent/100g.

### (4) Nylon 6 (P-8)

"A1030BRL" manufactured by UNITIKA LTD. was used.

### (5) Nylon 66 (P-9)

"E2000" manufactured by UNITIKA LTD. was used.

### (6) Heat resistance modifier

"PEP-24G" manufactured by Asahidenka Kogyo Inc. was used.

### (7) Mold releasing agent

"Ricomont NaV101" manufactured by Clariant corporation was used.

### (8) Inorganic fibrous reinforcement

"T289" manufactured by Nihon Denki Glass corporation was used.

### 2. Method for measurement

### (1) Relative Viscosity of polyamide

Dried pellet of polyamide copolymer(A) or polyamide homopolymer (B) is dissolved at the concentration of 1 g/dl in sulfuric acid of 96% by mass, and the solution was served to viscosity measurement after inorganic component is filtrated off through No.G-3 glass filter. The measurement was conducted at 25°C.

### (2) Copolymer composition of polyamide copolymer(A)

200mg of pellet of purified and dried polyamide copolymer(A) was dissolved in 3ml of trifluoroacetic acid deuteride, and the solution was allowed to ¹³C-NMR measurement (Nihon Denshi Corporation, "Lambda 300WB" type) at 25°C. Copolymer composition was determined from the intensity ratio of carbonyl carbon.

### (3) Cation Exchange Capacity(CEC)

CEC was determined based on the method of cation exchange capacity measurement (JBAS-106-77) for bentonite (powder) provided by the standard testing method of Japan Bentonite Industrial Society.

That is, using the apparatus where a vessel for decoction, an infusion tube and a receiver are vertically united, the lamellar silicate was, at first, treated by 1N-aq.ammonium acetate adjusted to pH=7 and all of the ion-exchangeable cation existing between layers were exchanged to NH₄⁺. And after sufficient washing with water and ethyl alcohol, above NH₄⁺ -type lamellar silicate was dipped in 10% by mass aqueous potassium chloride solution and NH₄⁺ in sample was exchanged to K⁺. Continuing to this, NH₄⁺ exuded by above ion-exchange reaction was allowed to neutralization titration using 0.1N-sodium hydroxide aqueous solution and the cation exchange capacity (milliequivalent/100g) of swellable lamellar silicate as ingredient was measured.

### (4) Inorganic ash content of lamellar silicate-containing polyamide resin

The pellet of dried lamellar silicate-containing polyamide resin was precisely measured into a porcelain crucible and was burnt for 15 hrs in a electric furnace keeping temperature at 500°C. The residue after burning is inorganic ash and the inorganic ash content was calculated by following formula:

Inorganic ash content(mass%) = [{weight of inorganic ash (g)}]/[{total weight of sample before burning(g)}] ×100 (5) The dispersion state of silicate layer in lamellar silicate-containing polyamide resin

A small sample cut out from a test piece for measuring the bending modulus described below was included in epoxy resin, and then an ultrathin slice sectioned with diamond knife was photographed using transmission type electron microscope (JEM-200CX type, accelerating voltage is 100kV, manufactured by Nihondenshi Inc.). The degree of dispersity of silicate layer was estimated by roughly measuring the magnitude and the interlayer distance of silicate layer in this photograph.

### (6) Arc resistance of polyamide resin composition

This was measured in conformity to ASTM D-495.

### (7) Bending modulus of the test piece

This was measured in conformity to ASTM D-790.

### (8) Deflection temperature by load of the test piece

This was measured in conformity to ASTM D-648 using the load of 0.45MPa.

### (9) Transparency of the fuse housing

A blade-type fuse element shown by Fig. 1 and Fig. 2 was manufactured and whether undermentioned each polyamide resin composition is proper as the housing 2 of fuse element 1 in the respect of the transparency or not was judged. Namely, the transparency was estimated as three grade of "O", "Δ" or " × based on the following criteria, according to how the fuse-element 5 inside housing 2 looks when it was observed at the distance of 30cm far from the fuse element 1. Generally, the color of the housing 2 of a fuse element 1 is pink, purple, gray, light brown, dark brown, red, blue, yellow, green, transparent and the like according to rated current. Therefore, the housings 2 having different color were molded from many kinds of polyamide resin samples and the transparency was ranked by the following criteria:
○ : the fuse-elements 5 are detectable about all color of the housing,
Δ : the fuse-elements 5 are detectable about a part of color of the housing,
× : the fuse-elements 5 are not detectable except the transparent housing.
In Fig. 1, the thickness of the housing 2 was 0.5 mm. (10) Insulation resistance after the breaking of fuse element

Whether underdescribed each sample is adequate as housing 2 of fuse element 1 in respect to insulation resistance after breaking or not was judged based on whether the insulation resistance after breaking (after fusing of fuse-element) is more than 1MΩ or not.

### (11) Heat discoloration

The test piece of 50×90×1mm was molded under the condition of molding temperature of 270°C and mold temperature of 40°C. This test piece was evaluated about color change ΔE after the heat treatment of 1000hrs in hot air dryer maintained at 125°C. The measurement was conducted using a color-difference meter SZ-E90 type manufactured by Nihondensyoku Kogyo Inc. The smaller this value is, the smaller the amount of discoloration is.

### (12) Mold release property

100,000 shots of the platy moldings of 10 × 10 × 1 (mm) having a side-gate of 2.0W × 0.5H × 3.0L (mm) were injection-molded under the condition of molding temperature of 270°C and mold temperature of 40°C. The percent defective(%) in total shots was calculated and evaluated. The smaller this value is, the more excellent the mold release property is and the higher the productivity is.

### (13) Abrasion of mold

100,000 shots of the platy moldings of 10 × 19 × 1 (rom) having a side-gate of 2.0W × 0.5H × 3.0L(mm) were injection-molded using a mold made of steel PX5 (manufactured by Daido Tokusyukou Inc.) under the condition of molding temperature of 270°C and mold temperature of 30°C. The heights of the gate parts of the moldings obtained at the first stage and the final stage of the injection molding were compared. Abrasion of molding die was estimated by the increasing rate(%) of height of the gate part. The smaller this value is, the smaller the amount of abrasion is and the higher the productivity is.

### [Reference Example 1] Preparation of nylon 6/12 (P-1)

8.0kg of ε-caprolactam, 2.0kg of 12-aminododecanoic acid and 1kg of water were charged into an autoclave having inner volume of 30 liter and the mixture was heated to 260°C with agitation to raise the pressure to 1.5MPa. After that, the temperature of 260°C and the pressure of 1.5MPa was maintained for 2hrs releasing water vapor gradually, and the pressure was further decreased to atmospheric pressure over 1hr, and the polymerization was further continued 30 minutes.

At the end of the polymerization, the resultant reaction product was drawn out as the strands from reactor, and after cooling and solidifying they were cut to pellet of nylon 6/12 resin (P-1).

Then, this pellet was refined with hot water of 95°C for 8 hrs and dried. The relative viscosity of polyamide obtained was 2.5. The copolymer composition measured by ¹³C-NMR was (nylon 6 component)/(nylon 12 component) = 88/12 (mol%/mol%).

### [Reference Example 2] Preparation of nylon 6/66 (P-2)

8.0kg of ε-caprolactam, 2.0kg of nylon 66("AH salt", manufactured by BASF) and 1kg of water were charged into an autoclave having content volume of 30 liter and the mixture was heated to 260°C with agitation to raise the pressure to 1.8MPa. After that, the temperature of 260°C and the pressure of 1.8MPa was maintained for 2hrs releasing water vapor gradually, and the pressure was further decreased to atmospheric pressure over 1hr, and the polymerization was continued 30 minutes more. Then, using the same way as Reference Example 1, the pellet of nylon 6/66 resin (P-2) was obtained. The relative viscosity of polyamide obtained was 2.5. The copolymer composition was (nylon 6 component)/(nylon 66 component) = 87/13 (mol%/mol%).

### [Reference Example 3] Preparation of lamellar silicate-containing nylon 6/12 (P-3)

1.0kg of ε-caprolactam, 2.0kg of 12-aminododecanoic acid and 200g of swellable fluoromica-based mineral(M-1) (total cation exchange capacity corresponds to 0.2mol) were mixed to 1kg of water, and the mixture was agitated for 1hr using a homomixer. Continuing to this, above mixed solution and 23.1g(0.2 mole) of an aqueous phosphoric acid solution of 85% concentration by mass were charged into an autoclave having inner volume of 30 liter where 7.0 kg of ε-caprolactam had been charged in advance, and the mixture was heated to 150°C over agitation, and after that, the agitation was continued for 1 hr keeping its temperature. Continuing to this, the mixture was heated to 260°C and the pressure was raised to 1.5MPa. And the temperature of 260°C and the pressure of 1.5MPa was maintained for 2hrs releasing water vapor gradually, and the pressure was further decreased to atmospheric pressure over 1hr, and the polymerization was further continued 40 minutes more.

At the end of the polymerization, the resultant reaction product was drawn out as the strands from reactor, and after cooling and solidifying they were cut to pellet of swellable fluoromica-based mineral-containing nylon 6/12 resin (P-3). Then, this pellet was refined with hot water of 95°C for 8 hrs and dried.

The pellet of this polyamide resin (P-3) was observed using transmission electron microscope and it was confirmed that the swellable fluoromica-based mineral was cleaved and silicate layer is dispersed in resin matrix on molecular order level.

The content of the silicate layer in polyamide resin (P-3) confirmed by ash measurement was 2.2% by mass and the relative viscosity was 2.5. And copolymer composition expressed by (component of nylon 6)/(component of nylon 12) was 88/12(mol%/mol%).

### [Reference Example 4] Preparation of lamellar silicate-containing nylon 6/12 (P-4)

Polyamide resin (P-4) was obtained in the same way as Reference Example 3, except for using M-2 instead of swellable fluoromica-based mineral M-1.

The pellet of this polyamide resin (P-4) was observed using transmission electron microscope and it was confirmed that the swellable fluoromica-based mineral was cleaved and silicate layer is dispersed in resin matrix on molecular order level.

The content of the silicate layer in polyamide resin (P-4) confirmed by ash measurement was 2.2% by mass and the relative viscosity was 2.5. And copolymer composition expressed by (component of nylon 6)/(component of nylon 12) was 88/12 (mol%/mol%).

### [Reference Example 5] Preparation of lamellar silicate-containing nylon 6/12 (P-5)

1.0kg of ε-caprolactam, 2.0kg of 12-aminododecanic acid and 200g of montmorillonite (M-3) (total cation exchange capacity corresponds to 0.23mol) were mixed to 1kg of water, and the mixture was agitated for 1hr using a homomixer. Continuing to this, above mixed solution and 26.5g(0.23 mole) of an aqueous phosphoric acid solution of 85% concentration by mass were charged into an autoclave having inner volume of 30 liter where 7.0 kg of ε-caprolactam had been charged in advance. After that, in the same way as Reference Example 3, the pellet made of montmorillonite-containing nylon 6/12 resin (P-5) was obtained.

The pellet of polyamide resin (P-5) after refining and drying was observed using transmission electronic microscope and it was confirmed that the swellable fluoromica-based mineral was cleaved and silicate layer is dispersed in resin matrix on molecular order level.

The content of the silicate layer in polyamide resin (P-5) confirmed by ash measurement was 2.2% by mass and the relative viscosity was 2.5. And copolymer composition expressed by (component of nylon 6)/(component of nylon 12) was 88/12(mol%/mol%).

### [Reference Example 6] Preparation of lamellar silicate-containing nylon 6/66 (P-6)

1.0kg of ε-caprolactam and 200g of swellable fluoromica-based mineral(M-1) (total cation exchange capacity corresponds to 0.2mol) were mixed to 2.0kg of water, and the mixture was agitated for 1hr using a homomixer. Continuing to this, above mixed solution and 23.1g (0.2 mole) of an aqueous phosphoric acid solution of 85% concentration by mass were charged into an autoclave having inner volume of 30 liter where 7.0 kg of c-caprolactam had been charged, and the mixture was heated to 100°C with agitation, and after that, the agitation was continued for 1 hr keeping its temperature. Then, 2.0kg of nylon 66 salt ("AH salt" manufactured by BASF) was charged into autoclave and the mixture was heated to 260°C with agitating to the pressure of 1.8MPa. And the temperature of 260°C and the pressure of 1.8MPa were maintained for 2hrs releasing water vapor gradually, and the pressure was further decreased to atmospheric pressure over 1hr, and the polymerization was further continued 30 minutes.

At the end of the polymerization, the resultant reaction product was drawn out as the strands from reactor, and after cooling and solidifying they were cut to pellet of swellable fluoromica-based mineral-containing nylon 6/66 resin (P-6). Then, this pellet was refined with hot water of 95°C for 8 hrs and dried.

The pellet of this polyamide resin (P-6) was observed using transmission electron microscope and it was confirmed that the swellable fluoromica-based mineral was cleaved and silicate layer is dispersed in resin matrix on molecular order level.

The content of the silicate layer in polyamide resin (P-6) confirmed by ash measurement was 2.2% by mass and the relative viscosity was 2.5. And copolymer composition expressed by (component of nylon 6)/(component of nylon 66) was 87/13(mol%/mol%).

### [Reference Example 7] Preparation of lamellar silicate-containing nylon 6 (P-7)

1.0kg of ε-caprolactam and 400g of swellable fluoromica-based mineral (M-1) (total cation exchange capacity corresponds to 0.4mol) were mixed to 1.0kg of water, and the mixture was agitated for 1hr using a homomixer. Continuing to this, above mixed solution and 46.2g(0.4 mole) of an aqueous phosphoric acid solution of 85% concentration by mass were charged into an autoclave having inner volume of 30 liter where 9.0 kg of ε-caprolactam had been charged in advance, and the mixture was heated to 150°C over agitation, and after that, the agitation was continued for 1 hr keeping its temperature. Continuing to this, the mixture was heated to 260°C and the pressure was raised to 1.5MPa. And the temperature of 260°C and the pressure of 1.5MPa was maintained for 2hrs releasing water vapor gradually, and the pressure was further decreased to atmospheric pressure over 1hr, and the polymerization was further continued 40 minutes.

At the end of the polymerization, the resultant reaction product was drawn out as the strands from reactor, and after cooling and solidifying they were cut to pellet of swellable fluoromica-based mineral-containing nylon 6 resin (P-7).

The pellet of this polyamide resin (P-7) after refining and drying was observed using transmission electron microscope and it was confirmed that the swellable fluoromica-based mineral was cleaved and silicate layer is dispersed in resin matrix on molecular order level.

The content of the silicate layer in polyamide resin (P-7) confirmed by ash measurement was 4.3% by mass and the relative viscosity was 2.5.

### Example 1 - 18

The mixtures having compounding ratio shown in Table 1 and Table 2, consisting of polyamide resins (P-1 to P-7) prepared in Reference Examples and P-8, P-9 and heat resistance modifiers, mold releasing modifiers and inorganic fibrous reinforcement were allowed to melt-kneading and then to injection-molding to make various kinds of test pieces using.the injection molding machine ("IS-80G" manufactured by Toshiba Machine, Co. Ltd.). The results of the measurement of the physical property are described in Table 1 and Table 2.

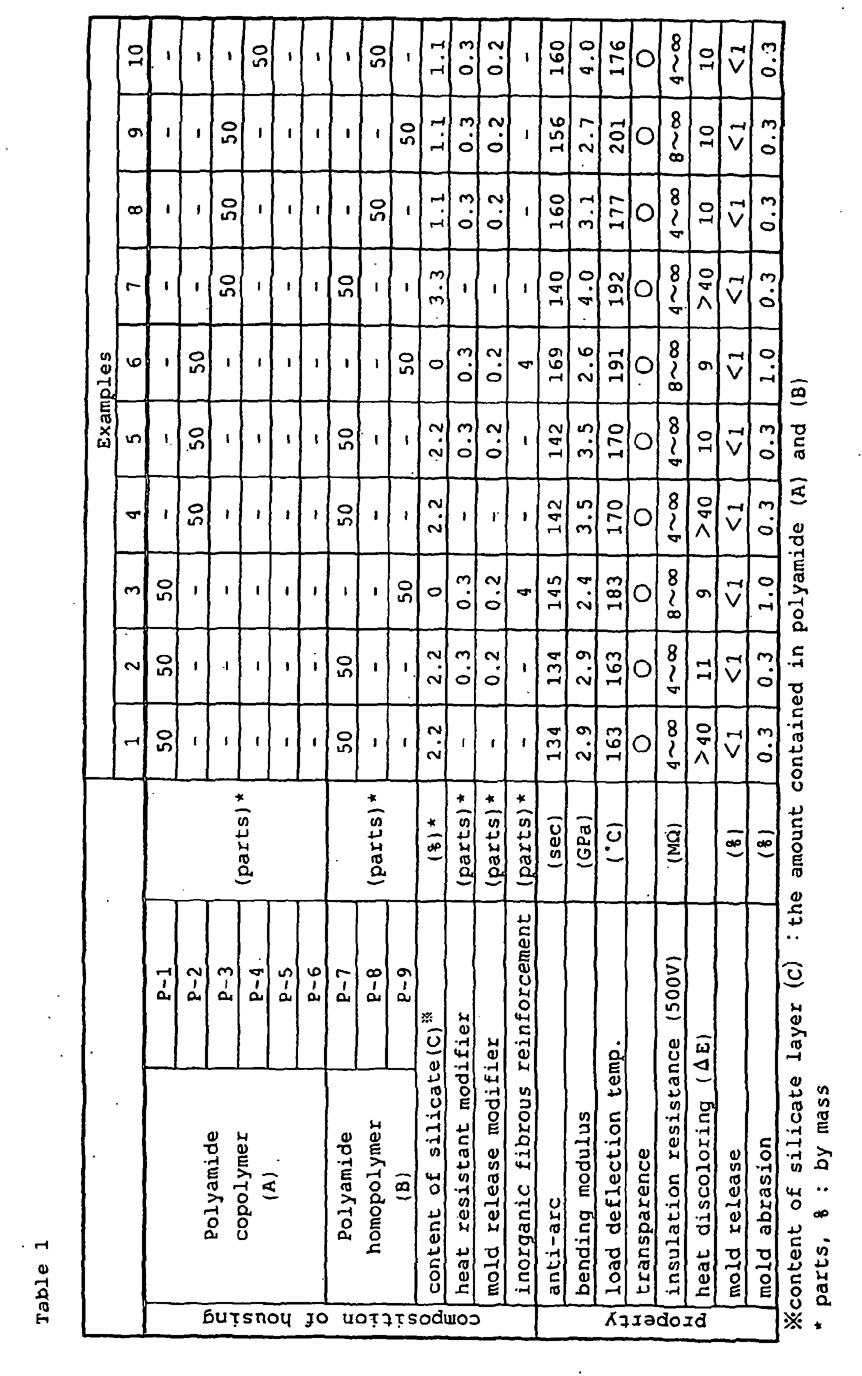

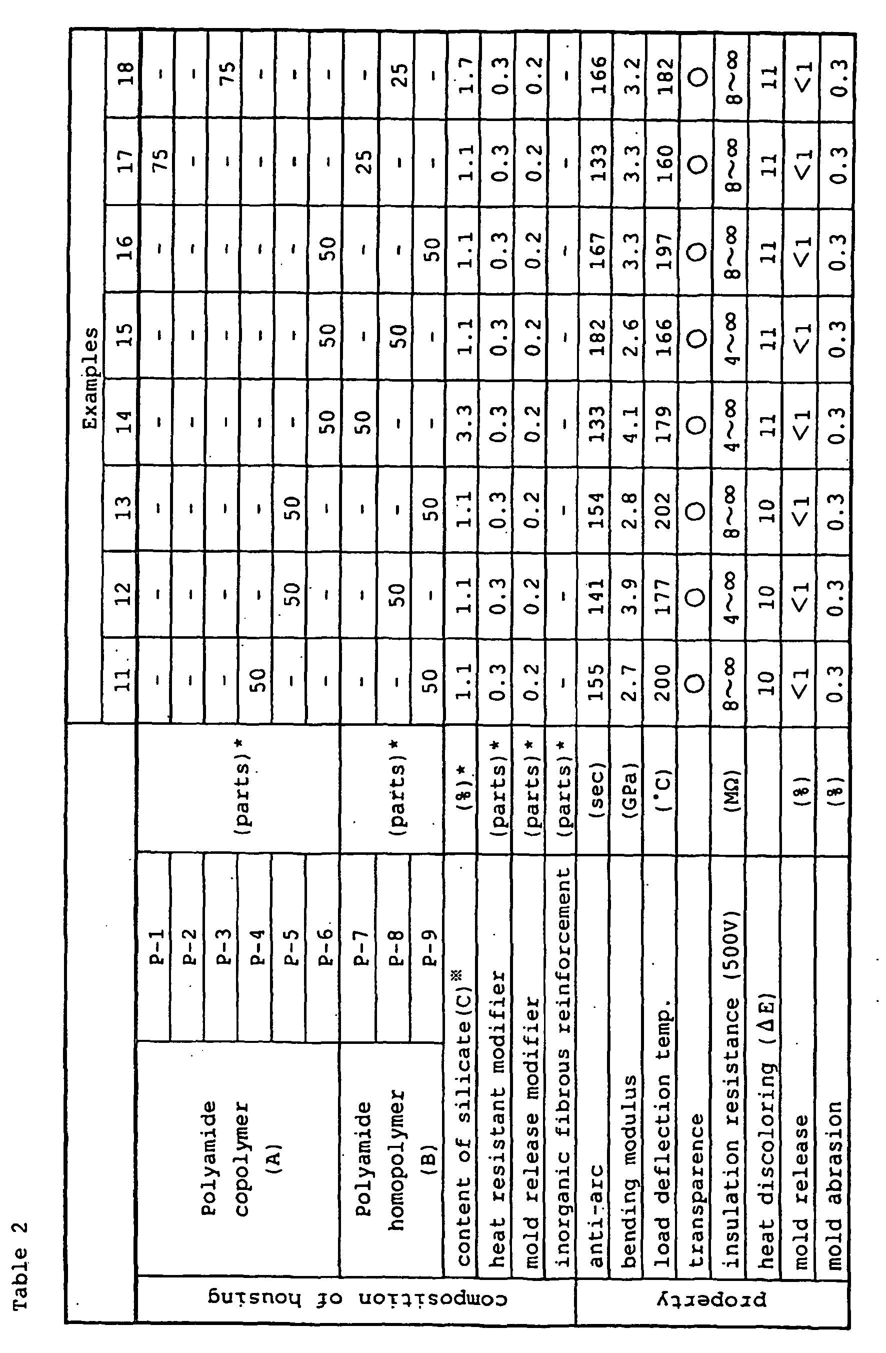

### Comparative Example 1 -26

The mixtures of compounding ratio shown in Table 3 to Table 5, consisting of polyamide resins (P-1 to P-7) prepared in Reference Examples and P-8, P-9 and heat resistance modifiers, mold releasing modifiers and inorganic fibrous reinforcement were allowed to melt-kneading and then to injection-molding to make various kinds of test pieces using the injection molding machine ("IS-80G" manufactured by Toshiba Machine Co. Ltd.) The results of the measurement of the physical property are described in Table 3 to Table 5 in combination with the example of prior art.

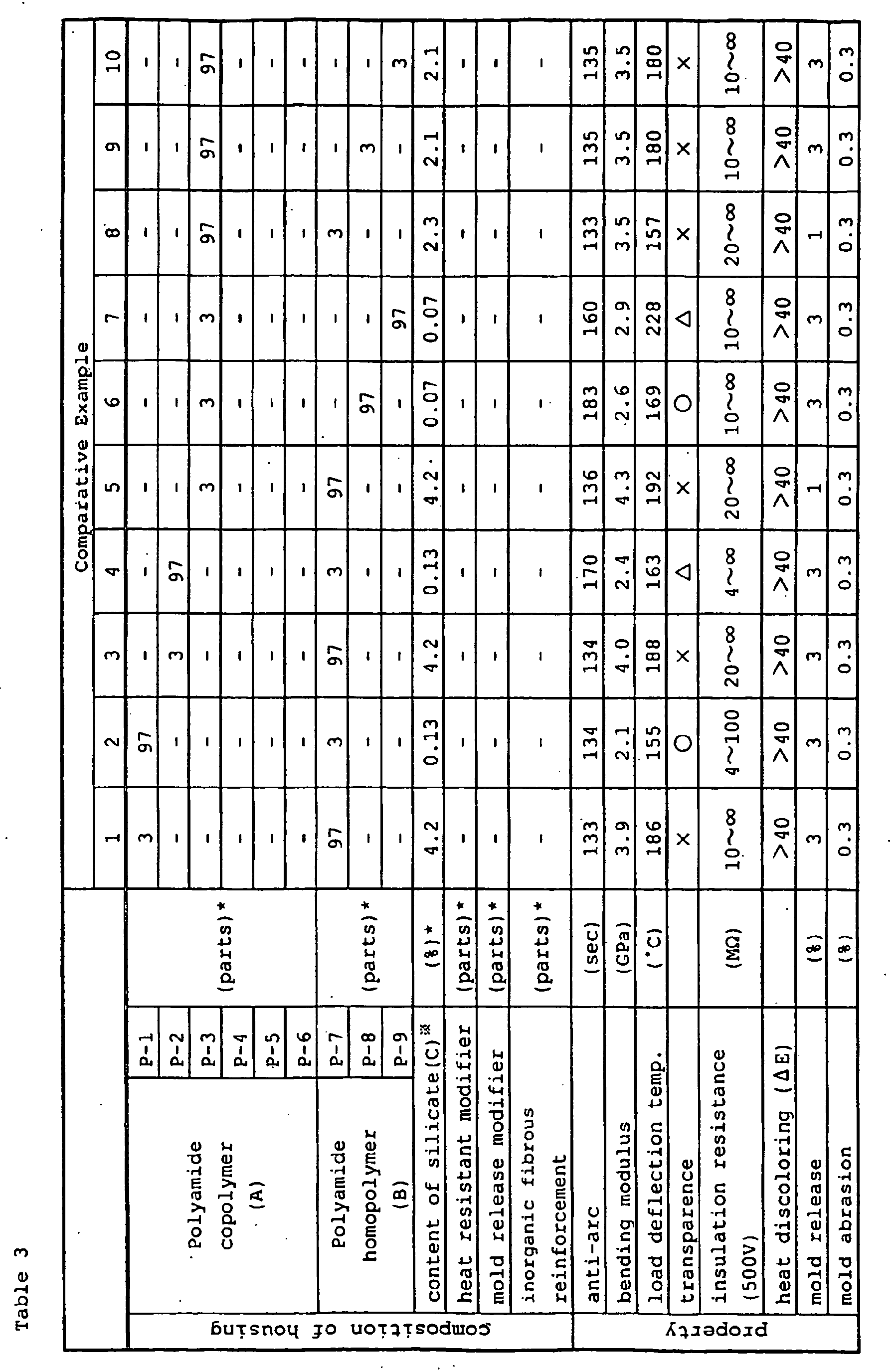

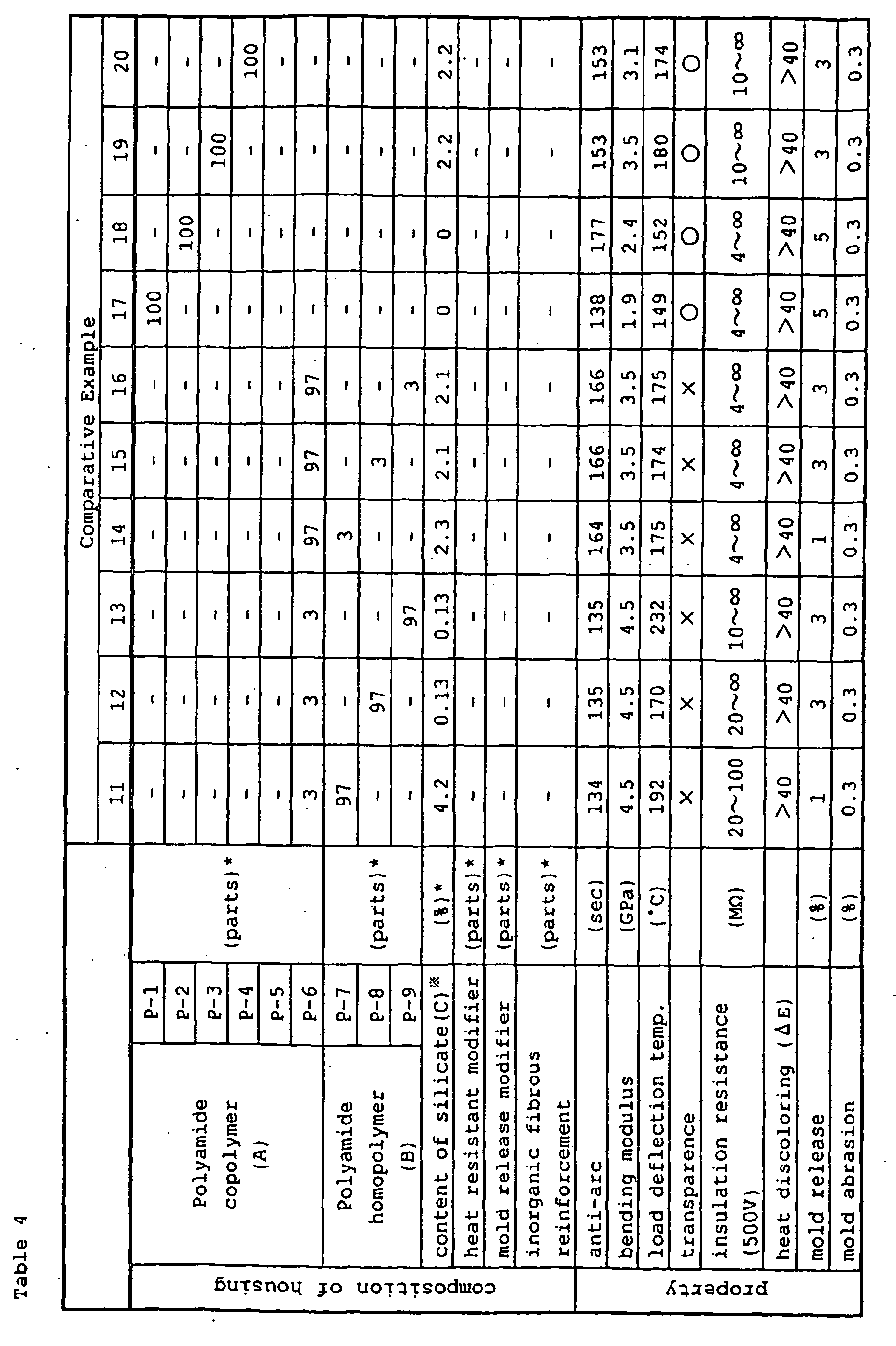

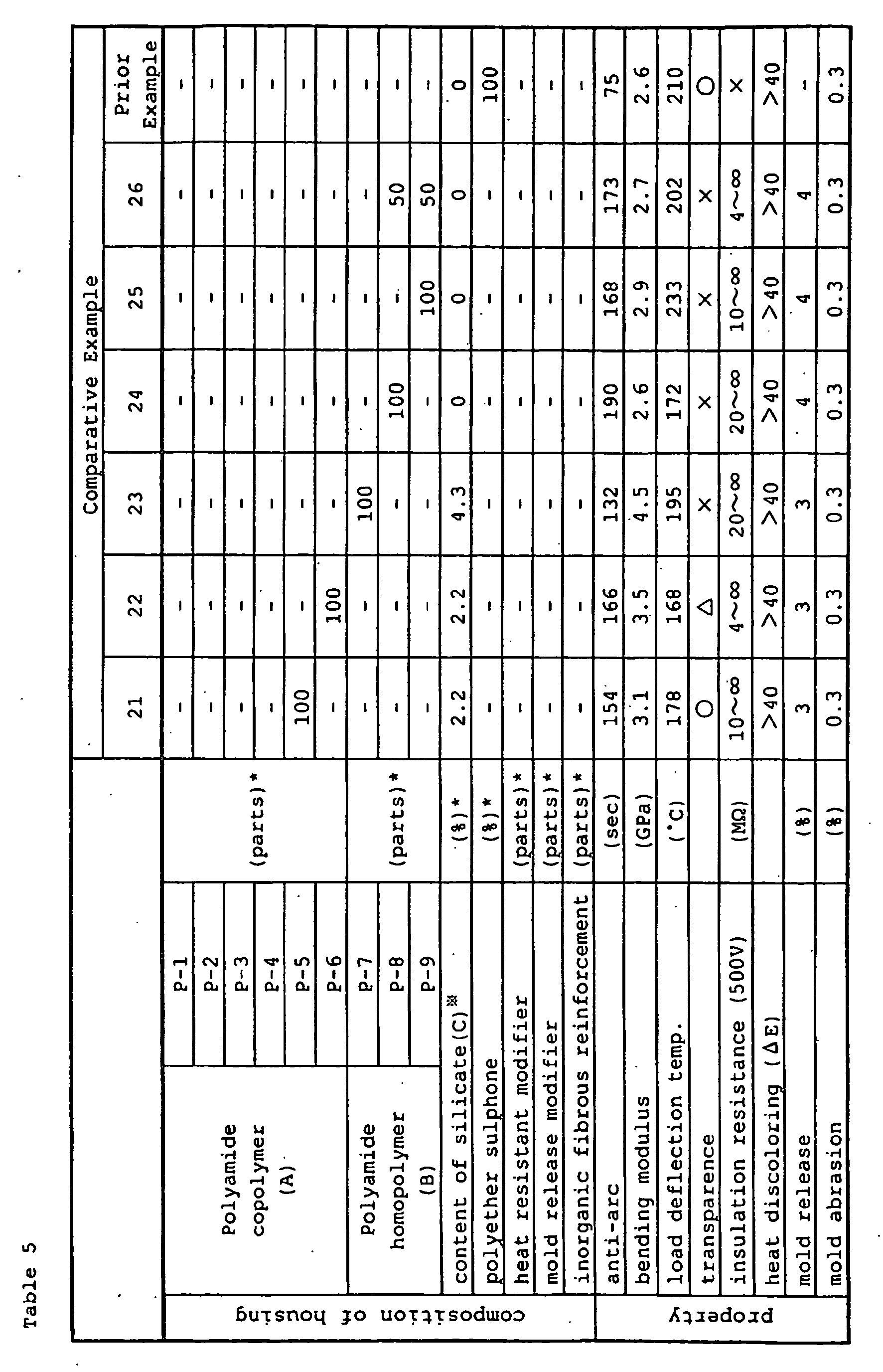

### Industrial Applicability

According to the present invention, sufficient arc resistance can be ensured on the change to higher voltage (for example, to 42 voltage system), and polyamide resin composition which is excellent in transparency, rigidity, heat resistance and productivity and can be suitably used as fuse element in the electric circuit for automobile etc. is obtained.

## Claims

1. A fuse element, wherein a housing is formed from a polyamide resin composition comprising 95 to 5% by mass of polyamide copolymer (A) and 5 to 95% by mass of polyamide homopolymer (B), wherein the fuse element has the housing and a pair of terminals projecting out of the prescribed flat surface of the housing and the housing contains a fuse-element connected between the base-end of both terminals.

2. The fuse element according to claim 1, wherein a silicate layer of swellable lamellar silicate (C) is dispersed in the polyamide resin composition on molecular order level and the content of the silicate layer (C) is 0.1 to 20% by mass.

3. The fuse element according to claim 1 or 2, wherein 0.1 to 4 parts by mass of a heat resistant modifier (D) based on 100 parts by mass of the polyamide resin composition are further incorporated in the polyamide resin composition.

4. The fuse element according to any of claims 1 to 3, wherein 0.01 to 0.5 parts by mass of a mold releasing modifier (E) based on 100 parts by mass of the polyamide resin composition are further incorporated in the polyamide resin composition.

5. The fuse element according to any of claims 1 to 4, wherein 3 to 10 parts by mass of an inorganic fibrous reinforcement (F) based on 100 parts by mass of the polyamide resin composition are further incorporated in the polyamide resin composition.

6. The fuse element according to any of claims 1 to 5, wherein the polyamide copolymer (A) is any one selected from the group consisting of nylon 6/66, nylon 6/12 and nylon 6/11

7. The fuse element according to any of claims 1 to 6, wherein the polyamide homopolymer (B) is any one selected from the group consisting of nylon 6, nylon 66, nylon 11 and nylon 12.

8. An automobile having a 42 V system comprising the fuse element according to any of claims 1 to 7.

9. Use of a fuse element in a 42 V system in an automobile, the fuse element comprising:
a housing and
a pair of terminals projecting out of a prescribed flat surface of the housing;
the housing containing a fuse-element connected between the base-ends of both terminals; and
the housing being formed from a polyamide resin composition, comprising:
95 to 5 % by mass of polyamide copolymer (A);
5 to 95% by mass of polyamide homopolymer (B); and
0.1 to 20% by mass of a silicate layer of swellable lamellar silicate (C) dispersed in the polyamide resin composition on molecular order level,
the polyamide copolymer (A) and the polyamide homopolymer (B) containing no aromatic ring in its molecular structure.

10. The use of a fuse element in a 42 V system in an automobile according to claim 9, wherein 0.1 to 4 parts by mass of a heat resistant modifier (D) based on 100 parts by mass of the polyamide resin composition are further incorporated in the polyamide resin composition.

11. The use of a fuse element in a 42 V system in an automobile according to claim 9 or 10, wherein 0.01 to 0.5 parts by mass of a mold releasing modifier (E) based on 100 parts by mass of the polyamide resin composition are further incorporated in the polyamide resin composition.

12. The use of a fuse element in a 42 V system in an automobile according to any of claims 9 to 11, wherein 3 to 10 parts by mass of an inorganic fibrous reinforcement (F) based on 100 parts by mass of the polyamide resin composition are further incorporated in the polyamide resin composition.

13. The use of a fuse element in a 42 V system in an automobile according to any of claims 9 to 12, wherein the polyamide copolymer (A) is any one selected from the group consisting of nylon 6/66, nylon 6/12 and nylon 6/11.

14. The use of a fuse element in a 42 V system in an automobile according to any of claims 9 to 13. wherein the polyamide homopolymer (B) is any one selected from the group consisting of nylon 6, nylon 66, nylon 11 and nylon 12.

## Patentansprüche

1. Ein Sicherungselement, wobei ein Gehäuse aus einer Polyamidharzzusammensetzung, umfassend 95 bis 5 Massen% eines Polyamid-Copolymers (A) und 5 bis 95 Massen% eines Polyamid-Homopolymers (B), gebildet ist, wobei das Sicherungselement das Gehäuse und ein Anschlusspaar, das aus der vorgegebenen flachen Oberfläche des Gehäuses hervorsteht, aufweist, und das Gehäuse ein Sicherungselement enthält, das mit den Basisenden beider Anschlüsse verbunden ist.

2. Das Sicherungselement gemäß Anspruch 1, wobei eine Silicatschicht aus quellbarem lamellenförmigem Silicat (C) auf Molekularebene in der Polyamidharzzusammensetzung dispergiert ist und der Anteil der Silicatschicht (C) 0,1 bis 20 Massen% beträgt.

3. Das Sicherungselement gemäß Anspruch 1 oder 2, wobei außerdem 0,1 bis 4 Massenteile eines wärmebeständigen Modifikators (D), bezogen auf 100 Massenteile der Polyamidharzzusammensetzung, in die Polyamidharzzusammensetzung inkorporiert sind.

4. Das Sicherungselement gemäß einem der Ansprüche 1 bis 3, wobei außerdem 0,01 bis 0,5 Massenteile eines Formentrennmittel-Modifikators (E), bezogen auf 100 Massenteile der Polyamidharzzusammensetzung, in die Polyamidharzzusammensetzung inkorporiert sind.

5. Das Sicherungselement gemäß einem der Ansprüche 1 bis 4, wobei außerdem 3 bis 10 Massenteile eines anorganischen faserförmigen Verstärkungsmittels (F), bezogen auf 100 Massenteile der Polyamidharzzusammensetzung, in die Polyamidharzzusammensetzung inkorporiert sind.

6. Das Sicherungselement gemäß einem der Ansprüche 1 bis 5, wobei das Polyamid-Copolymer (A) eines, ausgewählt aus der Gruppe bestehend aus Nylon 6/66, Nylon 6/12 und Nylon 6/11, ist.

7. Das Sicherungselement gemäß einem der Ansprüche 1 bis 6, wobei das Polyamid-Homopolymer (B) eines, ausgewählt aus der Gruppe bestehend aus Nylon 6, Nylon 66, Nylon 11 und Nylon 12, ist.

8. Ein Automobil mit einem 42 V-System, umfassend das Sicherungselement gemäß einem der Ansprüche 1 bis 7.

9. Verwendung eines Sicherungselements in einem 42 V-System in einem Automobil, wobei das Sicherungselement umfasst:
ein Gehäuse; und
ein Anschlusspaar, das aus einer vorgegebenen flachen Oberfläche des Gehäuses hervorsteht;
wobei das Gehäuse ein Sicherungselement enthält, das mit den Basisenden beider Anschlüsse verbunden ist; und
wobei das Gehäuse aus einer Polyamidharzzusammensetzung gebildet ist, umfassend:
95 bis 5 Massen% eines Polyamid-Copolymers (A);
5 bis 95 Massen% eines Polyamid-Homopolymers (B); und
0,1 bis 20 Massen% einer Silicatschicht aus quellbarem lamellenförmigem Silicat (C), das auf Molekularebene in der Polyamidharzzusammensetzung dispergiert ist,
wobei das Polyamid-Copolymer (A) und das Polyamid-Homopolymer (B) in ihrer Molekularstruktur keinen aromatischen Ring enthalten.

10. Die Verwendung eines Sicherungselements in einem 42 V-System in einem Automobil gemäß Anspruch 9, wobei außerdem 0,1 bis 4 Massenteile eines wärmebeständigen Modifikators (D), bezogen auf 100 Massenteile der Polyamidharzzusammensetzung, in die Polyamidharzzusammensetzung inkorporiert sind.

11. Die Verwendung eines Sicherungselements in einem 42 V-System in einem Automobil gemäß Anspruch 9 oder 10, wobei außerdem 0,01 bis 0,5 Massenteile eines Formentrennmittel-Modifikators (E), bezogen auf 100 Massenteile der Polyamidharzzusammensetzung, in die Polyamidharzzusammensetzung inkorporiert sind.

12. Die Verwendung eines Sicherungselements in einem 42 V-System in einem Automobil gemäß einem der Ansprüche 9 bis 11, wobei außerdem 3 bis 10 Massenteile eines anorganischen faserförmigen Verstärkungsmittels (F), bezogen auf 100 Massenteile der Polyamidharzzusammensetzung, in die Polyamidharzzusammensetzung inkorporiert sind.

13. Die Verwendung eines Sicherungselements in einem 42 V-System in einem Automobil gemäß einem der Ansprüche 9 bis 12, wobei das Polyamid-Copolymer (A) eines, ausgewählt aus der Gruppe bestehend aus Nylon 6/66, Nylon 6/12 und Nylon 6/11, ist.

14. Die Verwendung eines Sicherungselements in einem 42 V-System in einem Automobil gemäß einem der Ansprüche 9 bis 13, wobei das Polyamid-Homopolymer (B) eines, ausgewählt aus der Gruppe bestehend aus Nylon 6, Nylon 66, Nylon 11 und Nylon 12, ist.

## Revendications

1. Élément fusible, dans lequel un logement est formé à partir d'une composition de résine de polyamide comprenant de 95 à 5 % en masse d'un copolymère polyamide (A) et de 5 à 95 % en masse d'un homopolymère polyamide (B), dans lequel l'élément fusible comporte le logement et une paire de bornes faisant saillie à partir de la surface plate prescrite du logement et le logement contient un élément fusible connecté entre l'extrémité de la base des deux bornes.

2. Élément fusible selon la revendication 1, dans lequel une couche de silicate en silicate lamellaire gonflable (C) est dispersée dans la composition de résine de polyamide au niveau de l'ordre moléculaire et la teneur de la couche de silicate (C) est de 0,1 à 20 % en masse.

3. Élément fusible selon la revendication 1 ou 2, dans lequel 0,1 à 4 parties en masse d'un modificateur résistant à la chaleur (D) sur la base de 100 parties en masse de la composition de résine de polyamide sont en outre incorporées dans la composition de résine de polyamide.

4. Élément fusible selon l'une quelconque des revendications 1 à 3, dans lequel 0,01 à 0,5 partie en masse d'un modificateur de démoulage (E) sur la base de 100 parties en masse de la composition de résine de polyamide est en outre incorporée dans la composition de résine de polyamide.

5. Élément fusible selon l'une quelconque des revendications 1 à 4, dans lequel 3 à 10 parties en masse d'un renforcement fibreux inorganique (F) sur la base de 100 parties en masse de la composition de résine de polyamide sont en outre incorporées dans la composition de résine de polyamide.

6. Élément fusible selon l'une quelconque des revendications 1 à 5, dans lequel le copolymère polyamide (A) est l'un quelconque sélectionné à partir du groupe composé de Nylon 6/66, Nylon 6/12 et Nylon 6/11.

7. Élément fusible selon l'une quelconque des revendications 1 à 6, dans lequel l'homopolymère polyamide (B) est l'un quelconque sélectionné à partir du groupe composé de Nylon 6, Nylon 66, Nylon 11 et Nylon 12.

8. Automobile ayant un système de 42 V comprenant l'élément fusible selon l'une quelconque des revendications 1 à 7.

9. Utilisation d'un élément fusible dans un système de 42 V dans une automobile, l'élément fusible comprenant :
un logement ; et
une paire de bornes faisant saillie à partir d'une surface plate prescrite du logement ;
le logement contenant un élément fusible connecté entre l'extrémité de la base des deux bornes ; et
le logement étant formé à partir d'une composition de résine de polyamide, comprenant :
95 à 5 % en masse de copolymère polyamide (A) ;
5 à 95 % en masse d'homopolymère polyamide (B) ; et
0,1 à 20 % en masse d'une couche de silicate en silicate lamellaire gonflable (C) dispersée dans la composition de résine de polyamide au niveau de l'ordre moléculaire,
le copolymère polyamide (A) et l'homopolymère polyamide (B) ne contenant aucun cycle aromatique dans leur structure moléculaire.

10. Utilisation d'un élément fusible dans un système de 42 V dans une automobile selon la revendication 9, dans laquelle 0,1 à 4 parties en masse d'un modificateur résistant à la chaleur (D) sur la base de 100 parties en masse de la composition de résine de polyamide sont en outre incorporées dans la composition de résine de polyamide.

11. Utilisation d'un élément fusible dans un système de 42 V dans une automobile selon la revendication 9 ou 10, dans laquelle 0,01 à 0,5 partie en masse d'un modificateur de démoulage (E) sur la base de 100 parties en masse de la composition de résine de polyamide est en outre incorporée dans la composition de résine de polyamide.

12. Utilisation d'un élément fusible dans un système de 42 V dans une automobile selon l'une quelconque des revendications 9 à 11, dans laquelle 3 à 10 parties en masse d'un renforcement fibreux inorganique (F) sur la base de 100 parties en masse de la composition de résine de polyamide sont en outre incorporées dans la composition de résine de polyamide.

13. Utilisation d'un élément fusible dans un système de 42 V dans une automobile selon l'une quelconque des revendications 9 à 12, dans laquelle le copolymère polyamide (A) est l'un quelconque sélectionné à partir du groupe composé de Nylon 6/66, Nylon 6/12 et Nylon 6/11.

14. Utilisation d'un élément fusible dans un système de 42 V dans une automobile selon l'une quelconque des revendications 9 à 13, dans laquelle l'homopolymère polyamide (B) est l'un quelconque sélectionné à partir du groupe composé de Nylon 6, Nylon 66, Nylon 11 et Nylon 12.
